# EUROPEAN PATENT SPECIFICATION

(11) **EP 1 354 771 B1**
(45) Date of publication and mention of the grant of the patent: **24.05.2006**
(21) Application number: 03007994.1
(22) Date of filing: 10.04.2003
(51) Int. Cl.: B60R 21/20, B60R 21/16

(54) **Occupant-leg protection device**
Insassenbeinschutzvorrichtung
Dispositif de protection des jambes d'un occupant

(30) Priority: 15.04.2002 JP 2002112313
(43) Date of publication of application: 22.10.2003
(73) Proprietor: TAKATA CORPORATION, Minato-ku, Tokyo 106-8510 (JP)
(72) Inventor: Abe, Kazuhiro, Takata Corporation, Tokyo 106-8510 (JP)
(74) Representative: Banzer, Hans-Jörg

(56) References cited:
- DE-A- 19 946 477
- US-A- 6 155 595

## Description

### [Technical Field of the Invention]

The present invention relates to an occupant-leg protection device having a knee bag that protects the lower leg of an occupant from hitting an interior panel in front of the seat in case of collision of a car or the like and that prevents the lower part of the body of the occupant from moving toward the front of the vehicle by restraining the movement of the knee. An occupant -leg protection device in accordance with the preamble of claim 1 is known from US-A-6155595.

### [Description of the Related Art]

Some occupant-leg protection devices, which protect the lower leg of an occupant from a heavy load due to the hitting against an interior panel in front of the seat when a high-speed moving object, such as a car, experiences a head-on collision, mainly include an air bag disposed inside the interior panel (in the space on the back side of the interior panel), a gas generator for inflating the air bag, and a lid for covering the air bag in a normal state (when the high-speed moving object, such as a car, is not involved in a collision).

In such occupant-leg protection devices, the air bag is folded and placed inside the interior panel in the normal state, and the lid is mounted so as to cover the folded air bag.

When the car or the like experiences a head-on collision, the gas generator is actuated to eject gas, and the ejected gas is supplied to the air bag, thereby rapidly inflating the air bag. In this case, the lid is opened with the inflation of the air bag, and the air bag is permitted to protrude from the interior panel, and is inflated and deployed between the interior panel and the occupant's lower leg so as to protect the occupant's lower leg from hitting the interior panel (hereinafter, such a type of air bag that is inflated in front of the occupant's leg will be referred to as a "knee bag").

### [Problems to be Solved by the Invention]

An object of the present invention is to provide an occupant-leg protection device having a knee bag that is widely inflated and deployed in front of an occupant's leg in a short time even when the output of a gas generator is low.

Another object of the present invention is to provide an occupant-leg protection device that ensures a sufficiently large thickness after inflation.

### [Means for Solving the Problems]

According to the present invention, this object is achieved by an occupant-leg protection device as defined in claim 1. The dependent claims define advantageous or preferred embodiments of the occupant-leg protection device.

The occupant-leg protection device of the present invention includes a knee bag to be inflated in front of the leg of an occupant of a vehicle, and a gas generator for inflating the knee bag, wherein the knee bag includes a main chamber to be first inflated by gas first introduced from the gas generator, and an auxiliary chamber placed along a surface of the main chamber close to the occupant or a surface of the main chamber remote from the occupant to be inflated by gas introduced from the main chamber.

In such an occupant-leg protection device of the present invention, when the gas generator is actuated, the main chamber is inflated and deployed in front of the occupant's leg by gas from the gas generator. By setting the thickness (thickness in the front/rear direction of the occupant) of the main chamber to be relatively small, since the capacity of the main chamber is small, the main chamber is sufficiently quickly inflated and deployed even when the output of the gas generator is low.

In general, the distance between the occupant's leg and the interior panel in front of the leg is short. Such quick inflation and deployment of the main chamber in front of the occupant's leg is considerably effective in preventing the occupant's leg from directly hitting the interior panel.

In the present invention, after the main chamber is inflated and deployed in front of the occupant's leg, gas is introduced from the main chamber into the auxiliary chamber, and the auxiliary chamber is thereby inflated. Consequently, the knee bag becomes an inflated member having a sufficiently large thickness.

In the present invention, preferably, the main chamber is surrounded by a front panel close to the occupant and a rear panel remote from the occupant, and the auxiliary chamber is surrounded by an auxiliary-chamber panel opposing one of the front panel and the rear panel, and the one panel. In this knee bag, the number of panels that constitute the auxiliary chamber is reduced, and the capacity after folding and the cost can be reduced.

The auxiliary-chamber panel may have a tucked portion on the periphery thereof. This can sufficiently increase the thickness of the auxiliary chamber after inflation.

### [Brief Description of the Drawings]

Fig. 1 is a longitudinal sectional view of a knee bag according to an embodiment of the present invention.
Fig. 2 is an exploded perspective view of the knee bag shown in Fig. 1.
Fig. 3 is a cross-sectional view of the knee bag, taken along line III-III in Fig. 1.
Fig. 4 is an exploded perspective view of a modification of the knee bag.
Fig. 5 is a longitudinal sectional view of a knee bag according to another embodiment of the present invention.
Fig. 6 is a cross-sectional view, taken along line VI-VI in Fig. 5.

### [Description of the Embodiments]

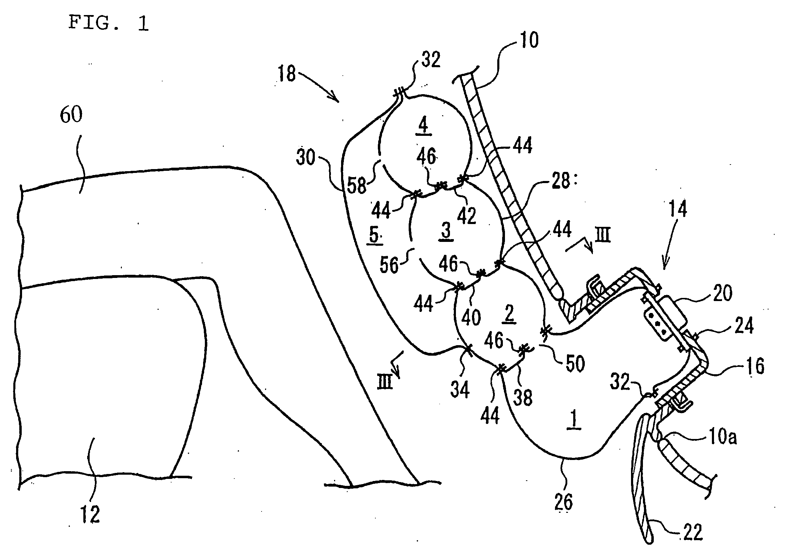

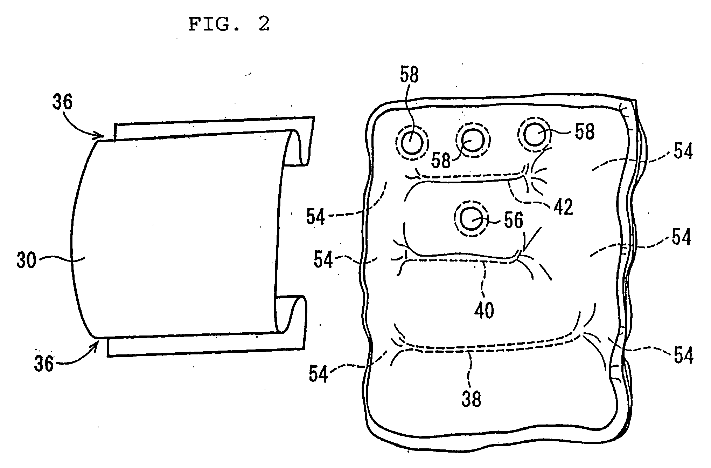

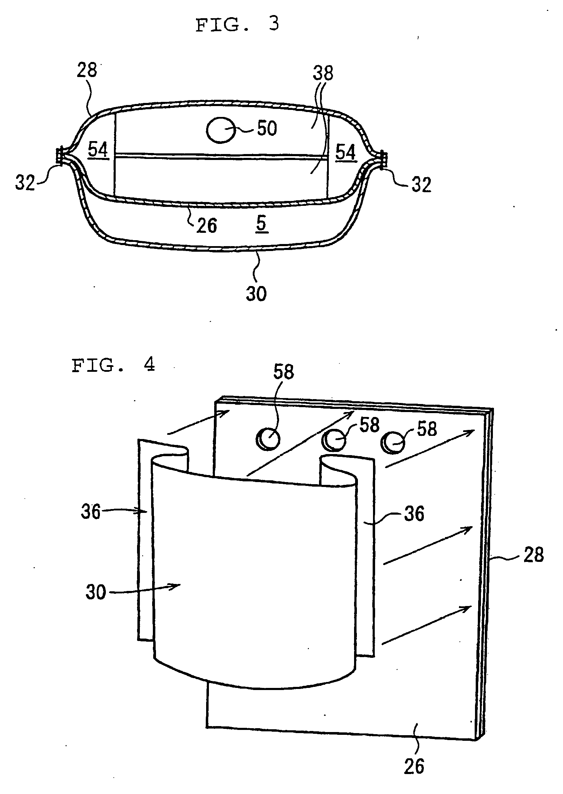

An embodiment of the present invention will be described below with reference to the drawings. Fig. 1 is a longitudinal sectional view of a section of a car in front of a seat, showing a state in which a knee bag according to an embodiment of the present invention is inflated, Fig. 2 is an exploded perspective view of the knee bag, and Fig. 3 is a cross-sectional view of the knee bag, taken along line III-III in Fig. 1. In the following description, the horizontal direction refers to the direction of width of a vehicle.

An occupant-leg protection device 14 is installed in an interior panel 10 in front of a seat 12, on which the occupant's leg 60 is shown.

The occupant-leg protection device 14 includes a retainer 16 shaped like a container, a knee bag 18 connected to the interior of the retainer 16, and a gas generator 20 for inflating the knee bag 18. The retainer 16 is placed at an opening 10a provided in the interior panel 10. Normally, the knee bag 18 is stowed in a folded state inside the retainer 16, and a lid 22 is mounted at the front of the retainer 16 to cover the knee bag 18. The lid 22 is normally placed so that it is substantially flush with the interior panel 10, and pivots open on its lower end toward the front side of the interior panel 10 when the knee bag 18 is inflated.

The knee bag 18 is clamped between a flange of the gas generator 20 and the retainer 16 at the rim of a gas inlet, and is fixed to the retainer 16 by bolts 24 for fastening the gas generator 20 to the retainer 16.

The knee bag 18 includes a front panel 26 on the occupant's side, a rear panel 28 on the side of the interior panel 10, and a surface panel 30 overlapping with the front of the front panel 26. The front panel 26 and the rear panel 28 are sewn together with sewing thread 32 at their peripheries to form a bag, and a main chamber is formed inside the bag.

A gas inlet is formed at the bottom of the rear panel 28, and the rim of the gas inlet is fixedly connected to the retainer 16 together with the gas generator 20, as described above.

The upper, right, and left edges of the surface panel 30 are sewn to the front panel 26 with the sewing thread 32. The lower edge of the surface panel 30 is sewn to the front panel 26 with sewing thread 34.

Tucked portions 36 are provided at the upper and lower edges of the surface panel 30. The tucked portions 36 may be provided at the right and left edges of the surface panel 30, as shown in Fig. 4, or may be provided at all the upper, lower, right, and left edges thereof, although not shown. An auxiliary chamber 5 is formed between the surface panel 30 and the front panel 26.

The interior of the main chamber surrounded by the front panel 26 and the rear panel 28 is partitioned into four small chambers, namely, a first chamber 1, a second chamber 2, a third chamber 3, and a fourth chamber 4 provided in that order from the bottom, by partition panels 38, 40, and 42 extending between the front panel 26 and the rear panel 28. The partition panels 38, 40, and 42 extend in the horizontal direction, and are sewn to the front panel 26 and the rear panel 28 with sewing thread 44.

In this embodiment, two partition panels 38, two partition panels 40, and two partition panels 42 are sewn together with sewing thread 46, respectively.

Spaces 54 through which gas flows are formed between the ends in the longitudinal (horizontal) direction of the partition panels 38, 40, and 42 and the side edges of the knee bag 18. The lowermost first chamber 1 and the second chamber 2 that is the second from the bottom also communicate with each other through an opening 50 formed in the partition panel 38.

A portion of the front panel 26 facing the third chamber 3 and the fourth chamber 4 is provided with openings 56 and 58 through which gas flows from the third chamber 3 and the fourth chamber 4 into the auxiliary chamber 5. In order that more gas can flow from the fourth chamber 4 into the auxiliary chamber 5 than from the third chamber 3, the third chamber 3 has one opening 56 and the fourth chamber 4 has three openings 58. Instead of thus increasing the number of openings, the diameter of the opening 58 of the fourth chamber 4 may be set to be larger than that of the opening 56.

In the occupant-leg protection device 14 having the knee bag 18 with such a configuration, the gas generator 20 is actuated in case of a car collision to generate gas for inflating the knee bag. The knee bag 18 starts to be inflated by the gas, pushes the lid 22 open, bulges out toward the front side of the interior panel 10, and is deployed upward along the interior panel 10.

During this time, in the knee bag 18, the first chamber 1 is first inflated, and the second chamber 2, the third chamber 3, and the fourth chamber 4 are inflated sequentially. When the third chamber 3 and the fourth chamber 4 are inflated more than a certain extent, gas flows from the third chamber 3 and the fourth chamber 4 into the auxiliary chamber 5 through the openings 56 and 58, so that the auxiliary chamber 5 is inflated while the surface panel 30 bulges out from the front panel 26 toward the occupant.

Since the small chambers 1 to 4 other than the auxiliary chamber 5 are first inflated in this way, even when the gas generator 20 is of a low-output type that generates a small amount of gas, the knee bag 18 is quickly deployed into the area in front of the occupant's leg along the interior panel 10. In this first deployment stage, the auxiliary chamber 5 is not inflated at all or is hardly inflated, and the thickness of the knee bag 18 is small. Therefore, the knee bag 18 is quickly inflated in a narrow space between the interior panel 10 and the occupant's leg.

Subsequently, the auxiliary chamber 5 is inflated by gas from the third chamber 3 and the fourth chamber 4, and the knee bag 18 increases in thickness to receive the occupant's leg. Consequently, impact applied to the occupant's leg is absorbed sufficiently.

In particular, since the surface panel 30 has the tucked portions 36 in this embodiment, the thickness of the knee bag 18 becomes sufficiently large when the auxiliary chamber 5 is inflated, and a markedly large amount of impact applied to the occupant's leg is absorbed.

While the first chamber 1 to the fourth chamber 4 are partitioned by the partition panels 38, 40, and 42 in the above embodiment, they may be partitioned by directly sewing the front panel and the rear panel, without using the partition panels.

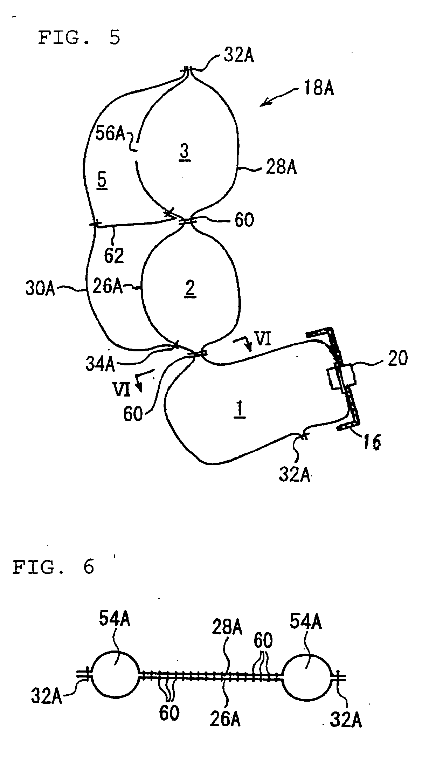

Figs. 5 and 6 show the configuration of a knee bag according to such an embodiment. Fig. 5 is a longitudinal sectional view similar to Fig. 1, and Fig. 6 is a cross-sectional view, taken along line VI-VI in Fig. 5.

In this knee bag 18A, a front panel 26A and a rear panel 28A are sewn together on the peripheries thereof with sewing thread 32A, thereby forming a main chamber. In order to partition the main chamber into a first chamber 1, a second chamber 2, and a third chamber 3, the front panel 26A and the rear panel 28A are also sewn at sewing portions 60 formed in the horizontal direction. Both ends of the sewing portions 60 are separate from the right and left edges of the knee bag 18A, so that gas passages 54A are formed at both the right and left ends of the sewing portions 60.

A surface panel 30A is placed so as to overlap with the front panel 26A, and the surface panel 30A is sewn to the front panel 26A with sewing threads 32A and 34A, thereby forming an auxiliary chamber 5. Although not shown, the surface panel 30A also has tucked portions.

The auxiliary chamber 5 communicates with the third chamber 3 through an opening 56A formed in the front panel 26A.

In this embodiment, the surface panel 30A and the front panel 26A are connected by a tether belt 62 in order to prevent the surface panel 30A from being excessively inflated to protrude toward the occupant when the auxiliary chamber 5 is inflated. Such a tether belt may be adopted in the embodiment shown in Figs. 1 to 4.

In this knee bag 18A, the first chamber 1, the second chamber 2, and the third chamber 3 are also inflated in that order by gas from a gas generator 20 and are quickly deployed toward the front side of the occupant's leg along an interior panel, and then, the auxiliary chamber 5 is inflated to receive the occupant's leg.

In this way, the knee bag 18A is also quickly inflated toward the front of the occupant's leg even when the output of the gas generator 20 is low. Moreover, after the auxiliary chamber 5 is inflated, the thickness of the knee bag 18A is sufficiently large, and the impact applied to the occupant's leg is absorbed sufficiently.

The above embodiments are examples of the present invention, and the present invention may be carried out by other embodiments.

For example, while the main chamber is partitioned into three or four small chambers in the above embodiments, it may be partitioned into two chambers or five or more chambers.

While the partition panels or sewing portions extending in the horizontal direction are adopted in order to partition the main chamber in the above embodiments, some of or all of the partition panels or sewing portions may extend vertically.

While the surface panels 30 and 30A have tucked portions in the above embodiments, the tucked portions may be omitted.

While the front panel and the rear panel are separate in the above embodiments, a continuous panel may be folded in two to form the front panel and the rear panel.

While the auxiliary chamber is formed on the occupant side of the main chamber in the above embodiments, it may be formed on the side of the main chamber close to the interior panel. That is, the auxiliary chamber may be formed so that it is surrounded by the rear panel 28 and the surface panel.

### [Advantages]

As described in detail above, the present invention provides an occupant-leg protection device having a knee bag that is extremely quickly deployed in front of the occupant's leg even when the output of the gas generator is low and that ensures a large thickness after inflation.

## Claims

1. An occupant-leg protection device comprising:
a knee bag (1, 2, 3, 4, 5) to be inflated in front of the leg (60) of an occupant of a vehicle; and
a gas generator (20) for inflating said knee bag (1, 2, 3, 4, 5),
wherein said knee bag comprises:
a main chamber (1, 2, 3, 4) to be first inflated by gas first introduced from said gas generator (20); and
an auxiliary chamber (5) to be inflated by gas introduced from said main chamber (1, 2, 3, 4),
charcterised in that said auxiliary chamber (5) is placed along a surface of said main chamber (1, 2, 3, 4) close to the occupant or a surface of said main chamber remote from the occupant.

2. An occupant-leg protection device according to claim 1, wherein said main chamber is surrounded by a front panel (26; 26A) close to the occupant and a rear panel (28; 28A) remote from the occupant, and said auxiliary chamber (5) is surrounded by an auxiliary-chamber panel (30) opposing one of said front panel (26; 26A) and said rear panel (28; 28A), and said one panel (26; 26A; 28; 28A).

3. An occupant-leg protection device according to claim 2, wherein said auxiliary-chamber panel (30) has a tucked portion (36) on the periphery thereof.

## Patentansprüche

1. Insassenbeinschutzvorrichtung umfassend:
einen Knieairbag (1, 2, 3, 4, 5), welcher vor dem Bein (60) eines Insassen eines Fahrzeugs aufzublasen ist; und
einen Gaserzeuger (20) zum Auflasen des Knieairbags (1, 2, 3, 4, 5),
wobei der Knieairbag umfasst:
eine Hauptkammer (1, 2, 3, 4), welche zuerst durch Gas, welches zuvor von dem Gaserzeuger (20) eingeführt worden ist, aufzublasen ist; und
eine Hilfskammer (5), welche von Gas, das aus der Kammer (1, 2, 3, 4) eingeführt wird, aufzublasen ist,
**dadurch gekennzeichnet,**
**dass** die Hilfskammer (5) entlang einer Oberfläche der Hauptkammer (1, 2, 3, 4) nahe dem Insassen oder entlang einer Oberfläche der Hauptkammer entfernt von dem Insassen angeordnet ist.

2. Insassenbeinschutzvorrichtung nach Anspruch 1, wobei die Hauptkammer von einer vorderen Stoffbahn (26; 26A) nahe dem Insassen und von einer hinteren Stoffbahn (28; 28A) entfernt von dem Insassen umgeben ist, und wobei die Hilfskammer (5) von einer Hilfskammerstoffbahn (30) umgeben ist, welche gegenüber entweder der vorderen Stoffbahn (26; 26A) oder der hinteren Stoffbahn (28; 28A) oder der einen Stoffbahn (26; 26A; 28; 28A) angeordnet ist.

3. Insassenbeinschutzvorrichtung nach Anspruch 2, wobei die Hilfskammerstoffbahn (30) einen gefalteten Abschnitt (36) an dem Umfang davon aufweist.

## Revendications

1. Un dispositif de protection des jambes d'un occupant comprenant :
- un sac pour genoux (1, 2, 3, 4, 5) destiné à être gonflé devant les jambes (60) d'un occupant d'un véhicule, et
- un générateur de gaz (20) pour gonfler ledit sac pour genoux (1, 2, 3, 4, 5),
dans lequel ledit sac pour genoux comprend :
- une chambre principale (1, 2, 3, 4) destiné à être gonflé en premier avec un gaz d'abord introduit à partir dudit générateur de gaz (20) ; et
- une chambre auxiliaire (5) destiné à être gonflé avec un gaz introduit à partir de ladite chambre principale (1, 2, 3, 4),
**caractérisé en ce que** ladite chambre auxiliaire (5) est positionnée le long d'une surface de ladite chambre principale (1, 2, 3, 4) proche de l'occupant, ou d'une surface de ladite chambre principale éloignée de l'occupant.

2. Un dispositif de protection des jambes d'un occupant selon la revendication 1, dans lequel ladite chambre principale est entourée d'un panneau avant (26 ; 26A) proche de l'occupant et d'un panneau arrière (28 ; 28A) éloigné de l'occupant, et ladite chambre auxiliaire (5) est entourée d'un panneau de chambre auxiliaire (30) faisant face à l'un desdits panneau avant (26 ; 26A) et panneau arrière (28 ; 28A), et dudit panneau (26 ; 26A ; 28 ; 28A).

3. Un dispositif de protection des jambes d'un occupant selon la revendication 2, dans lequel ledit panneau de chambre auxiliaire (30) a une partie repliée (36) sur sa périphérie.
